# EUROPEAN PATENT APPLICATION

(11) **EP 2 784 894 A1**
(43) Date of publication of application: **01.10.2014**
(21) Application number: 13161586.6
(22) Date of filing: 28.03.2013
(51) Int. Cl.: H02H 9/00

(54) **Protecting against transients in a power control system**

(71) Applicant: Vetco Gray Controls Limited, Bristol BS48 1BS (GB)
(72) Inventor: Davis, Julian Richard, Nailsea, Bristol BS48 1BS (GB); Morley, Graham Thomas, Nailsea, Bristol BS48 1BS (GB); Puchianu, Silviu, Nailsea, Bristol BS48 1BS (GB)
(74) Representative: Emerson, Peter James

(57) **Abstract**

A system (1) is disclosed for providing alternating current to at least one inductive load (7), which includes at least one switching means (4) for switching power to the load on and off, control means (3) adapted for controlling said at least one switching means (4) and a pre-magnetisation means (9), wherein the pre-magnetisation means (9) is configured to generate pulses which cause the switching means (4) to pre-magnetise the inductive load (7).

## Description

### Field of the Invention

This invention relates to protecting against transients and inrush currents in a power control system, for example in a subsea fluid production well power control system.

### Background of the Invention

In subsea fluid production well power control systems, the voltage transients inherently associated with power on/off switching of inductive loads are potentially very damaging, because communication modems are directly coupled (connected electrically) to power lines in order to implement communication on power (COP) systems. High voltage transients may damage topside and subsea modems used in COP-based communication systems and topside and subsea power distribution transformers.

The switching of AC power to a transformer is typically achieved in modern power control systems by semiconductor switches such as silicon controlled rectifiers (SCRs), triacs and gate turn off thyristors (GTOs). Prior art methods, such as those disclosed in WO 01/03323, US5563459, US 2006/262881 and US 4745515, teach that to minimise inrush currents to the transformer primary, it is prudent to phase control the switching off of the semiconductor devices at the point of the AC waveform when the input current falls to zero, thereby ensuring that the magnetic remanance in the transformer core is zero and thus will not go into saturation when the AC supply is restored. However, this precaution has no value if the AC power source is inadvertently removed when current is flowing in the transformer primary, i.e. not a zero current phase controlled switching off, leaving remanance in the core, and potentially saturation and large inrush currents at restoration of the power source.

This situation is avoided by the invention disclosed in European Patent Application No. 11194360.1, which describes a method of preventing switching on transients in transformer fed power supply systems by injecting a DC current from a DC power supply source at switching off, thus pre-magnetising the transformer core to a low remanance so that the inrush current at the next switching on is minimised.

The present invention removes the need for a separate DC power supply to achieve the same pre-magnetisation.

### Summary of the Invention

According to the invention from one aspect, there is provided a system for providing alternating current to at least one inductive load, the system including at least one switching means for switching power to said at least one load on and off, control means adapted for controlling said at least one switching means and a pre-magnetisation means, wherein the pre-magnetisation means is configured to generate pulses which cause the switching means to pre-magnetise the inductive load.

According to the invention from another aspect, there is provided a method for providing alternating current to at least one inductive load, comprising the steps of:
providing at least one switching means for switching power to said at least one load on and off;
providing a control means adapted for controlling said at least one switching means; and
using a pre-magnetisation means to generate pulses which cause the switching means to pre-magnetise the inductive load.

The control means could comprise a zero voltage crossing comparator and phase control logic, and the output of said comparator could be used by the phase control logic to control the switching means to switch power to said at least one load on and off in phase with an input alternating current at a positive going crossing point of the alternating current waveform.

The pre-magnetisation means could comprise a pre-magnetisation pulse generator.

The pre-magnetisation means could comprise pre-magnetisation control logic configured to control the pre-magnetisation pulse generator to generate a train of pulses, wherein each pulse controls the switching means to switch power to said at least one load on prior to a negative going crossing point of the alternating current waveform.

The alternating current waveform could comprise a sine wave.

The at least one inductive load could comprise a winding of a transformer.

A system according to the invention typically comprises a power control system for a subsea well and a method according to the invention typically is performed in such a system.

### Brief Description of the Drawings

Fig. 1 is a schematic diagram of an embodiment of an electronic power control system in accordance with the present invention;
Fig. 2 is an oscilloscope trace of voltage and current measured in the system of Fig. 1 at switching on, without pre-magnetisation of the transformer coil;
Fig. 3 is an oscilloscope trace of voltage and current measured in the system of Fig. 1 when pre-magnetisation is applied prior to switching on; and
Fig. 4 is an oscilloscope trace of voltage and current measured in the system of Fig. 1 at switching on, when pre-magnetisation has been applied prior to switching on.

### Detailed Description of the Invention

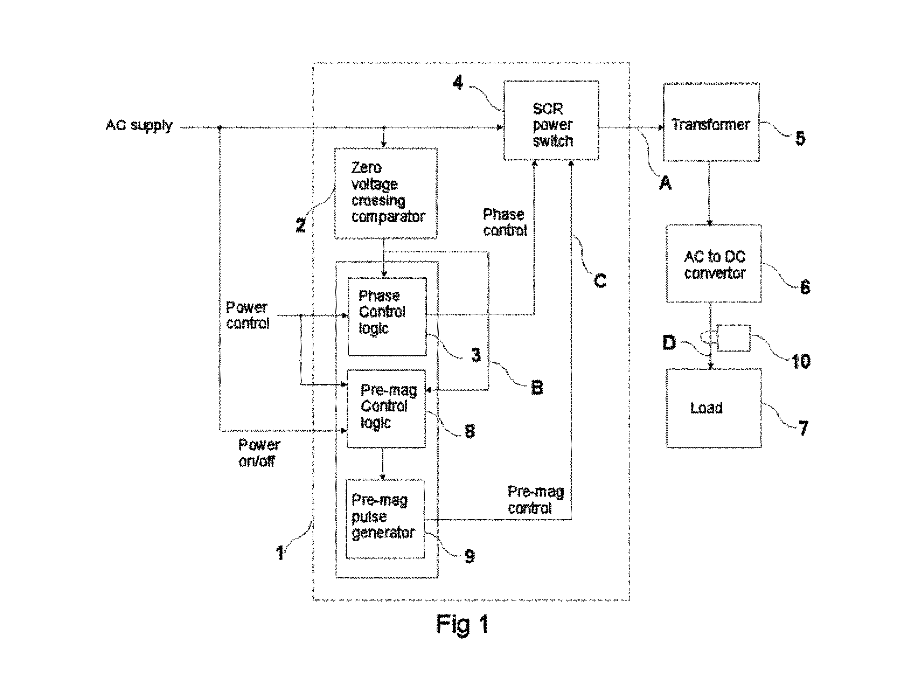

Fig. 1 shows a typical electronic power control system which employs a SCR power switch as the semiconductor switching device. In this example, the load is a subsea electronics module (SEM) which is part of a subsea fluid (e.g. hydrocarbon) production well control system. However, the present invention may be applied to any transformer fed system.

The power control system 1 conventionally consists of a zero voltage crossing comparator 2, feeding phase control logic 3, which ensures that, under controlled conditions the switching on and off of a SCR power switch 4 occurs when the AC supply voltage is at the zero voltage crossing point. The switched power from the SCR power switch 4 feeds a transformer 5, the output of which feeds an AC to DC converter 6, which in turn supplies power to a DC load 7 (in this case, a SEM). The embodiment of the present invention is a modification to this arrangement, specifically including the addition of transformer pre-magnetisation logic 8, controlling a pulse generator 9, which produces pre-magnetisation DC power generation by the SCR power switch 4 to the transformer 5.

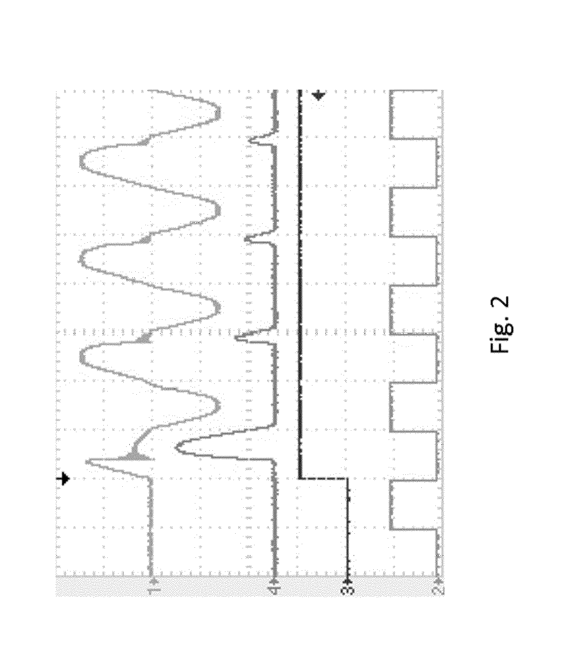

Fig. 2 will now be described, in which:
Channel 1 represents the output voltage from the SCR power switch 4 input to the transformer 5 (via an isolation amplifier), with 500V per division. This is measured at point A in Fig. 1.
Channel 2 represents the zero voltage crossing comparator output, with 5V per division. This is measured at point B in Fig. 1.
Channel 3 represents the switch gate control signal for the SCR power switch 4, with 5V per division (and 5V representing switching on of SCR power switch 4). This is measured at point C in Fig. 1.
Channel 4 represents the load (SEM) current, with 5V per division, monitored by a DC current probe set to 1A per 10mV (100A per Volt). This is measured at point D in Fig. 1.

Fig. 2 illustrates switching on of the supply to the transformer 5 after the transformer has been switched off with a significant magnetic remanance in its core with the phase control logic 3 and the pre-magnetisation control logic 8 disabled, such that the SCR power switch 4 is switched on at the positive going zero crossing point of the input sine waveform. As can be seen on channel 1, the input voltage rises but soon results in transformer core saturation, which results in a very large inrush current (see channel 4) which further results in serious distortion of the input supply voltage waveform and consequential voltage transients which can damage the supply load. The effect can also be seen to persist over several cycles of the supply voltage.

It is this effect which results in potential damage due to transients when the supply is accidentally removed (e.g. by a circuit breaker opening) which cannot be prevented by conventional phase control of the SCR power switch 4.

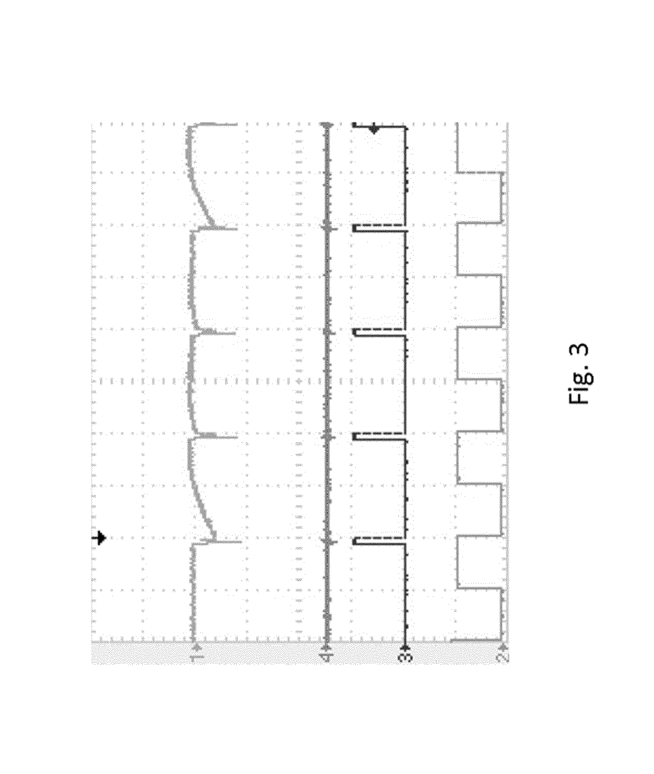

Fig. 3 illustrates the operation of the pre-magnetisation modification of the SCR power switch 4 control circuitry, in accordance with the embodiment of the present invention. Prior to switching on occurring, following a power on command to the power control system 1, the AC supply causes the pre-magnetisation logic 8 to instruct the pre-magnetisation pulse generator 9 output a train of short duration SCR switching on pulses (see channel 3) to turn on the SCR power switch 4 just before the previous input voltage negative half sine wave reaches the zero voltage crossing point, which results in the SCR power switch 4 switching off. Note that this occurs on the negative half sine wave only. The correct switching on point is triggered by the pre-magnetisation logic 8 from the zero crossing point detector 2 (see channel 2). This train of short SCR switching on pulses on the negative half sine wave cycles only results in a small negative DC supply voltage being applied to the transformer, which ensures that the remanance in its core is small and slightly negative relative to the next turn on cycle, i.e. set to prevent transformer core saturation when the next positive sine wave supply voltage is applied at switching on. The train of pre-magnetisation pulses is switched off after a few cycles, whereupon the phased controlled switching on process by phase control logic 3 is allowed to initiate the switching on cycle.

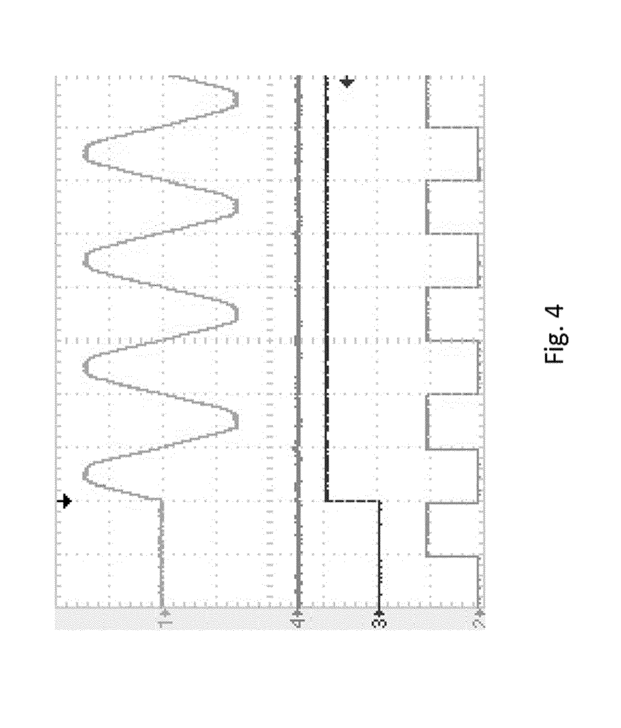

Fig. 4 shows the resultant oscilloscope trace of the four channels referred to previously when pre-magnetisation has been applied prior to the phase controlled switching on process. The input current surge on channel 4 and the input supply waveform distortion on channel 1 are drastically reduced compared to Fig. 2. These traces were recorded after the transformer 5 had been deliberately set to have a high core remanance and connected to the system.

### Advantages of using the Invention

Transformers supplying the electronics of subsea fluid extraction wells must be relied upon not to be the source of damaging voltage transients as they are located subsea, often beneath many kilometres of sea water. Consequently, they are very expensive to recover and repair. The present invention enables a substantial reduction of the risk of such damaging transients and thus potentially saves well operators major operating costs.

## Claims

1. A system for providing alternating current to at least one inductive load, the system including at least one switching means for switching power to said at least one load on and off, control means adapted for controlling said at least one switching means and a pre-magnetisation means, wherein the pre-magnetisation means is configured to generate pulses which cause the switching means to pre-magnetise the inductive load.

2. A system according to claim 1, wherein the control means comprises a zero voltage crossing comparator and phase control logic, and wherein said the output of said comparator is used by the phase control logic to control the switching means to switch power to said at least one load on and off in phase with an input alternating current at a positive going crossing point of the alternating current waveform.

3. A system according to claim 2, wherein the pre-magnetisation means comprises a pre-magnetisation pulse generator.

4. A system according to claim 3, wherein the pre-magnetisation means comprises pre-magnetisation control logic configured to control the pre-magnetisation pulse generator to generate a train of pulses, wherein each pulse controls the switching means to switch power to said at least one load on prior to a negative going crossing point of the alternating current waveform.

5. A system according to any preceding claim, wherein said at least one inductive load comprises a winding of a transformer.

6. A system according to any preceding claim, wherein the alternating current waveform is a sine wave.

7. A system according to any preceding claim, comprising a power control system for a subsea well.

8. A method for providing alternating current to at least one inductive load, comprising the steps of:
providing at least one switching means for switching power to said at least one load on and off;
providing a control means adapted for controlling said at least one switching means; and
using a pre-magnetisation means to generate pulses which cause the switching means to pre-magnetise the inductive load.

9. A method according to claim 8, wherein the control means comprises a zero voltage crossing comparator and phase control logic, and wherein said the output of said comparator is used by the phase control logic to control the switching means to switch power to said at least one load on and off in phase with an input alternating current at a positive going crossing point of the alternating current waveform.

10. A method according to claim 9, wherein the pre-magnetisation means comprises a pre-magnetisation pulse generator.

11. A method according to claim 10, wherein the pre-magnetisation means comprises pre-magnetisation control logic configured to control the pre-magnetisation pulse generator to generate a train of pulses, wherein each pulse controls the switching means to switch power to said at least one load on prior to a negative going crossing point of the alternating current waveform.

12. A method according to any of claims 8 to 11, wherein said at least one inductive load comprises a winding of a transformer.

13. A method according to any of claims 8 to 12, performed in a power control system for a subsea well.
